(19) Europäisches Patentamt
European Patent Office
Office européen des brevets

(11) Veröffentlichungsnummer : **0 317 551 B1**

## (12) EUROPÄISCHE PATENTSCHRIFT

(45) Veröffentlichungstag der Patentschrift :
**06.05.92 Patentblatt 92/19**

(51) Int. Cl.$^5$ : **C03B 5/027, C03B 5/20**

(21) Anmeldenummer : **89100638.9**

(22) Anmeldetag : **01.02.88**

(54) **Glasschmelzofen.**

(30) Priorität : **30.05.87 DE 3718276**

(43) Veröffentlichungstag der Anmeldung :
**24.05.89 Patentblatt 89/21**

(45) Bekanntmachung des Hinweises auf die
Patenterteilung :
**06.05.92 Patentblatt 92/19**

(84) Benannte Vertragsstaaten :
**AT BE CH DE ES FR GB IT LI NL SE**

(56) Entgegenhaltungen :
**EP-A- 0 230 492**
**DE-C- 806 883**
**FR-A- 609 269**
**FR-A- 743 978**
**FR-A- 2 558 820**
**FR-A- 2 558 821**

(56) Entgegenhaltungen :
**GB-A- 325 238**
**US-A- 2 640 859**
**US-A- 2 658 095**
**US-A- 3 198 618**

(60) Veröffentlichungsnummer der früheren
Anmeldung nach Art. 76 EPü : **0 293 545**

(73) Patentinhaber : **BETEILIGUNGEN SORG**
**GMBH & CO. KG**
**Postfach 520, Stoltestrasse 23**
**W-8770 Lohr am Main (DE)**

(72) Erfinder : **Pieper, Helmut**
**Buchenstrasse 19**
**W-8770 Lohr/Main (DE)**

(74) Vertreter : **Schulze Horn, Stefan, Dipl.-Ing.**
**M.Sc. et al**
**Goldstrasse 36**
**W-4400 Münster (DE)**

## Beschreibung

Die Erfindung betrifft einen Glasschmelzofen mit einem Schmelzteil, einem Läuterteil und einem Homogenisierungsteil.

Aus der FR-A-2 558 820 und FR-A-2 558 821 sind bereits Glasschmelzöfen ekannt, die drei Teile aufweisen, von denen die mittlere ein flaches Läuterteil ist. Nachteilig sind aber keine Aufheizmittel vorhanden, um hier die höchste Badtemperatur zu erreichen.

Aus der EP-A-0 086 858 ist weiterhin ebenfalls ein Ofen bekannt, der drei Teile aufweist, wobei zwischen Schmelzteil und Läuterteil ein Flachteil beschränkter Tiefe vorgesehen ist, wo die Schmelze mittels Elektroden aufgeheizt und teilweise geläutert wird. Unter der Gemengeaufgabe wird durch weitere Elektroden Energie zugeführt. es wird angedeutet, daß Energieaustausch zwischen den Verbrennungsgasen und der den im Schmelzteil angeordneten Brennern zugefährten Verbrennungsluft möglich ist. Nachteilig kann bei diesem Ofen aber Gemenge oder mit Gemenge verunreinigtes Glas in den Läuterteil eindringen und eine vollkommene Läuterung des Glases verhindern.

Es ist Aufgabe der Erfindung, einen Glasschmelzofen zu schaffen, der Glas von besonders guter Qualität herstellt und der es erlaubt, auch nur geringe Glasmengen zu entnehmen und bei dem zeitweise, z.B. Nachts, eine Glasentnahme unterbleiben kann.

Über die genannten Vorteile hinaus soll der erfindungsgemäße Ofen wirtschaftlich herstellbar und betriebssicher zu fahren sein, wobei im Bedarfsfall ein weitgehender Austausch von fossiler und elektrischer Energie möglich sein soll.

Diese Aufgabe wird erfindungsgemäß durch die im Anspruch 1 erwähnten glasschmelzofen gelöst.

Die den Wirkungsgrad herabsetzende Wärmeübertragung durch Strahlung aus dem Läuterteil wird vorteilhaft durch den zwischen Läuter- und Schmelzteil angebrachten Strahlungsschutzwall verhindert.

Ersichtlicherweise vermag der erfindungsgemäße Glasschmelzofen in Verbindung mit dem Verfahren zu seinem Betrieb die anstehenden Probleme in besonders vorteilhafter Weise und erstmalig zu lösen. Das Flüssigbleiben des Glases auch im Ruhezustand und die Einstellung eines optimalen Strömungsfeldes in dem Gemenge-Vorwärmbereich der Wanne wird dabei durch die Zugabe von vergleichsweise geringen Mengen elektrischer Energie gewährleistet.

Weitere vorteilhafte Ausgestaltungen der Erfindung sind in den Unteransprüchen 2 bis 7 genannt.

Im folgenden wird ein Ausführungsbeispiel der Erfindung anhand von Zeichnungen näher erläutert. Es zeigen:

Figur 1 einen Längsschnitt durch die eigentliche Schmelzwanne einer ersten Ausführungsform der Erfindung,
Figur 2 die Aufsicht auf die Wanne gemäß Figur 1,
Figur 3 einen Längsschnitt durch eine auch für die diskontinuierliche Entnahme geeignete Schmelzwanne,
Figur 4 einen Horizontalschnitt durch die Wanne gemäß Figur 3 in Höhe der Oberfläche des Glasbades und
Figur 5 einen Schnitt durch die Wanne gemäß Figur 3 und 4 oberhalb der Oberfläche des Glasbades.

Gemäß den Figuren besteht der erfindungsgemäße Glasschmelzofen aus einer länglichen, rechteckigen Wanne mit einen Läuterteil 2 und einem Schmelzteil 1. Als Läuterteil 2 wird derjenige Wannenteil bezeichnet, in welchem Brenner 20 angeordnet sind, die zur Verfeuerung von Öl oder Gas dienen und dort die im Ofen höchste Temperatur erzeugen.

Im Schmelzteil 1 sind Elektroden 6 angeordnet, die ein Einfrieren des Glasbades in diesem Bereich, insbesondere im direkten Bereich der Gemengeauflage verhindern.

Im einzelnen ist die Wanne entsprechend herkömmlicher Technik aufgebaut, wie sie auch in älteren Anmeldungen der Anmelderin beschrieben wird, so daß auf eine weitergehende Beschreibung verzichtet werden kann. Dies gilt insbesondere für die Gestaltung der Wandungen, des Gewölbes, des Bodens, der Brenner, der Elektroden sowie des Auslasses am gemengeaufgabefernen Ende des Homogenisierungsteils 2a und für die Gestaltung der Abgasabzugsöffnungen.

Im Wanneninneren ist am aufgabeseitigen Ende des Läuterteils 2 ein Strahlungsschutzwall 38 angeordnet, der von der Decke bis in das Glasbad reicht und verhindert, daß Strahlung in den Schmelzteil 1 gelangt. Wie bekannt, wird bei hohen Kammertemperaturen der größte Teil der Energie durch Strahlung übertragen und es ist daher erfindungswesentlich, die durch die Brenner 20 zugeführte Energie im Läuterteil 2 zu konzentrieren.

Dadurch kann die Läuterung und damit die Qualität des Glases vollständig unabhängig vom Schmelzteil bestimmt werden, da keinerlei Rückströmungen auftreten. Auch der Einsatz inhomogener Rohstoffe und starke Schaumbildung oder Einsatz von Natronlauge mit viel zu verdampfendem Wasser hat keine Rückwirkung auf die Qualität des Glases, wobei die Homogenisierung im Schmelzteil durch Bubbler erfolgen kann.

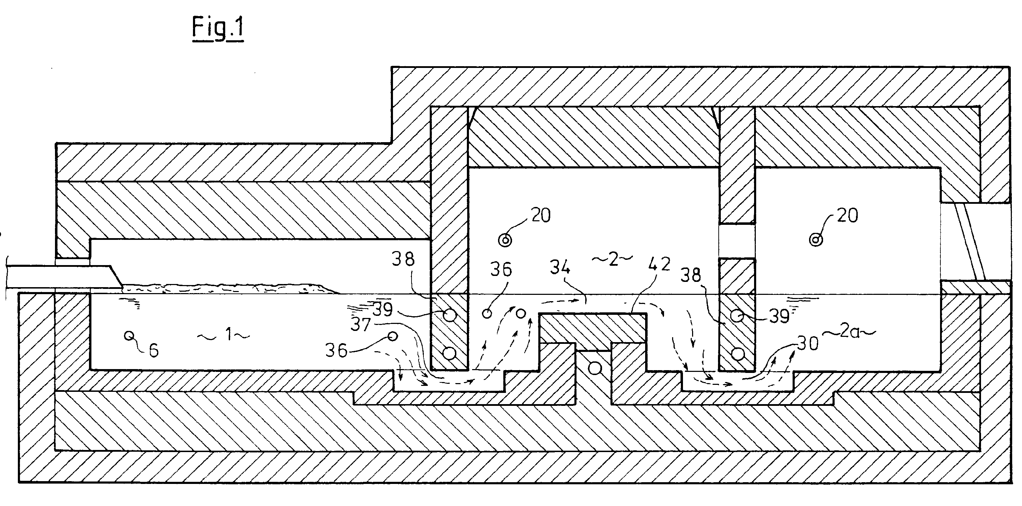

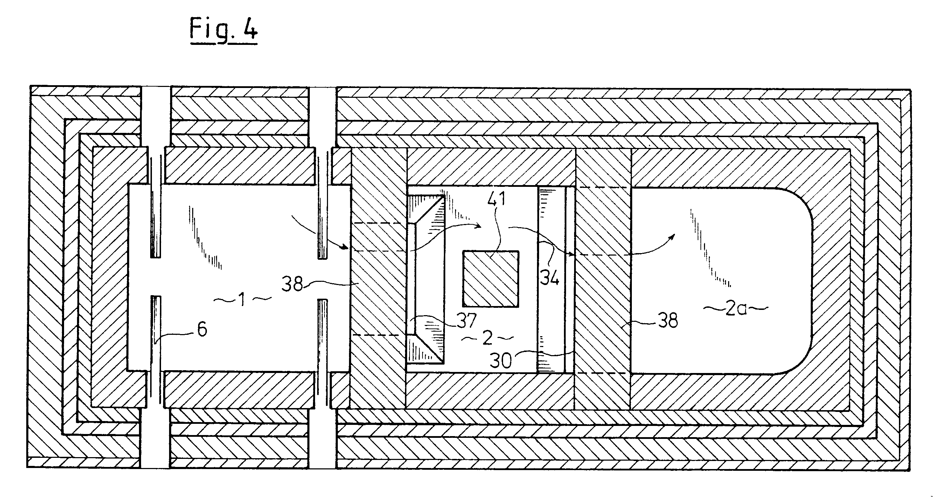

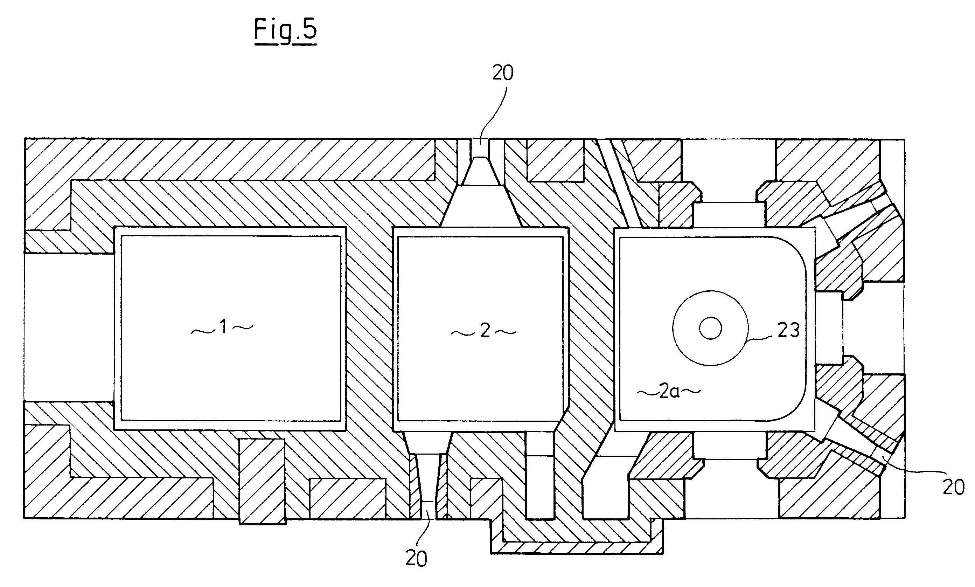

Gemäß den Figuren 1 bis 5 weist das erfindungsgemäße Prinzip drei in Strömungsrichtung aufeinanderfolgende Ofen- bzw. Wannenteile auf, wobei der Schmelzteil 1 in Strömungsrichtung von dem Läuterteil 2 und dieser wiederum von dem Homogenisierungsteil 2a gefolgt wird. Die höchste Temperatur des Glasstromes liegt dabei in einem besonders flach gestalteten Bereich 34 des Läuterteils 2 vor, wobei die entsprechende Aufheizung sowohl durch Brenner 20 als auch durch Elektroden 36 erfolgen kann. Besonders vorteilhaft ist es allerdings, wenn relativ gegenüber der elektrischen Energie billigere konventionelle Energie mittels Brennern eingeleitet wird, wobei eine vollständige Temperaturanhebung des Glasbades durch die geringe Badtiefe im Bereich 34 gewährleistet wird.

Das gleichmäßig erhitzte Glas gelangt also aus dem Bereich 34 in den Homogenisierungsteil 2a, in welchem es nach Art einer "Kolbenströmung" ohne Verwirbelung unter Abkühlung absinkt. Die Abkühlung gewährleistet dabei, daß die vorhandene Schichtung des Glases nicht verlassen wird, so daß eine Verwirbelung sicher unterbleibt.

Das Gemenge wird am vorderen (strömungstechnisch gesehen) Ende des Schmelzteils 1 aufgegeben, wobei es in Richtung Läuterteil 2 getragen wird. Ein Transport in den Läuterteil wird aber durch einen Bogen 38 mit einem Bodendurchlaß 37 verhindert, wobei der Bogen 38 durch Luft gekühlt werden kann. Diese später als Verbrennungsluft nutzbare Luft kann in Röhren aus z.B. Inconel geführt werden, welches hochhitzebeständig ist.

Nach dem Bodendurchlaß 37 steigt das jetzt nicht mehr mit Gemenge durchmischte Glas in einer Kolbenströmung auf, da durch die Zugabe von Energie von oben auch hier die gewünschte Schichtung derart eingestellt wird, daß das kühlste Glas unten und das heißeste Glas oben vorliegt. Durch diese Temperaturschichtung entsteht auch hier eine "Kolbenströmung" ohne eine Verwirbelung. Sie gewährleistet, daß nicht bereits vorerhitztes Glas in die eigentliche Läuterzone eintritt bzw. daß bereits hocherhitztes Glas wieder im vorderen Teil des Läuterteils 2 absinkt.

Um eine sehr starke Energiezuführung im Schmelzteil 1 zu gewährleisten, können in dessen hinteren Ende Deckenbrenner eingesetzt werden, wobei unter jedem der Brenner ein Bubbler vorhanden ist, der gewährleistet, daß laufend kälteres Glas nachströmt und so eine Oberhitzung vermieden wird. Ein entsprechender Bubbler kann auch unterhalb des Eingabepunktes des Gemenges bzw. im entsprechenden Bereich vorliegen, um auch hier laufend eine Glasströmung zu erzeugen und ein Einfrieren zu verhindern.

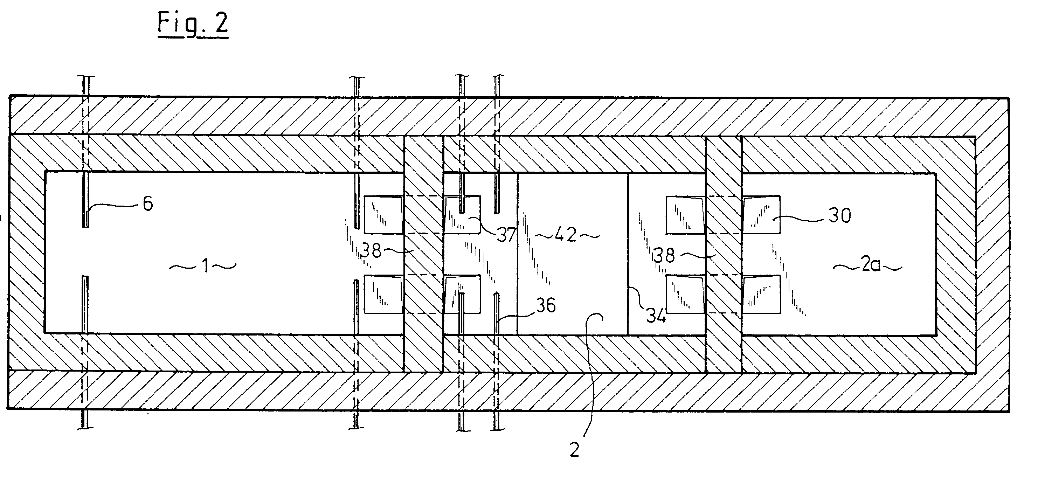

In den Figuren 1 und 2 ist eine vereinfachte Ausführung des erfindungsgemäßen Ofens gezeigt, wobei die Erhitzung im Schmelzteil 1 über Elektroden 6 erfolgt. Das Gemenge erstreckt sich dabei über einen erheblichen Teil des Schmelzteils 1. Das geschmolzene Glas strömt dann durch einen Bodenauslaß 37 in den Läuterteil 2 und wird dabei während des Aufstieges durch weitere Elektroden 36 undvon der Oberfläche her durch einen oder mehrere Brenner 20 erhitzt. Auch hier ist während des Aufstieges das Vorliegen einer "Kolbenströmung" gegeben und das Glas erreicht seine höchste Temperatur im Bereich 34, in welchem die vorstehend bereits beschriebene geringe Tiefe des Glasbades vorliegt.

Das Glas strömt dann in einer weiteren Kolbenströmung im strömungsmäßig gesehen hinteren Teil des Läuterteils 2 zu dem weiteren Bodendurchlaß 30 und von da aus in den Homogenisierungsteil 2a, in welchem die Verluste bzw. die gewünschte Einstellung der Temperaturschichtung durch weitere Brenner 20 ausgeglichen werden können.

Die scheitrechten Bögen 38 sowie der Boden des Läuterteils 2 können ebenfalls durch kühle Verbrennungsluft gekühlt werden, die in Rohren aus hochhitzebeständigem Material geführt wird.

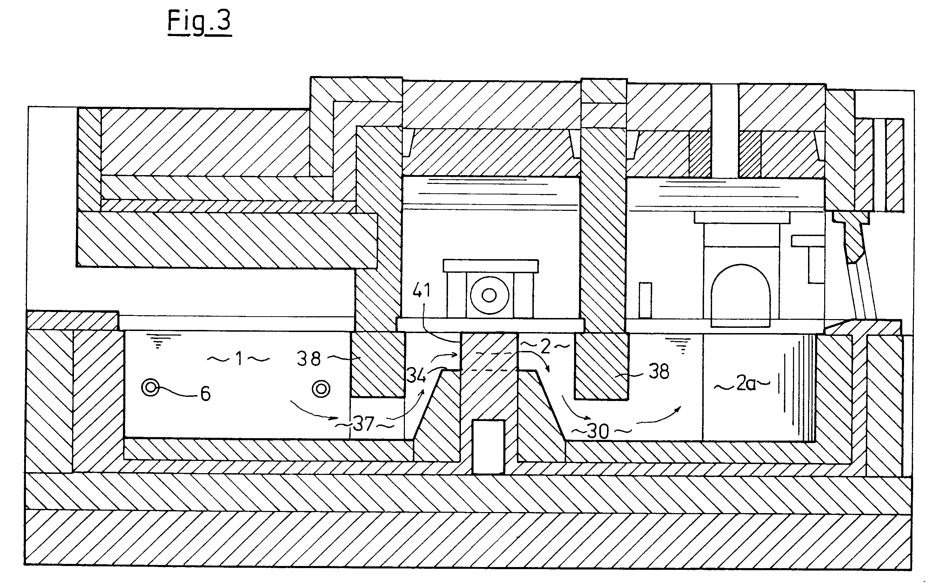

Gemäß den Figuren 3 bis 5 wird das Aufschmelzen des Gemenges im Schmelzteil 1 wiederum durch die Zuführung von elektrischer Energie über Elektroden 6 vorgenommen und das Durchströmen des Läuterteils 2 mittels erst einer aufwärts und dann einer abwärts gerichteten Kolbenströmung erfolgt wie in Verbindung mit den Figuren 1 und 2 beschrieben. Als Homogenisierungsteil 2a dient dabei die vorzugsweise indirekt beheizte Arbeitswanne mit Brennern 23.

Um eine Rückströmung auch ohne Entnahme von Glas aus dem Homogenisierungsteil bzw. der Arbeitswanne sicher zu verhindern, ist gemäß Figur 3 im Läuterteil 2 ein Stromverengungseinsatz 41 aus Feuerfestmaterial angeordnet, der den durchfließenden Glasstrom in zwei Teile teilt und auch eine horizontale Verwirbelung nicht zuläßt. Da über die zugeführte Energie über den Brenner 20 in dem Läuterteil 2 die gewünschte Temperaturschichtung ohne Verwirbelung auch während der Stillstandszeiten eingehalten wird, eignet sich die Ausführung besonders gut für Ofen mit diskontinuierlicher Entnahme. Die indirekte Beheizung gewährleistet dabei auch, daß die gewünschte Temperaturschichtung innerhalb des Homogenisierungsteils 2a bzw. der Arbeitswanne auch ohne Entnahme erhalten bleibt. Die Temperaturen sind hier also auch ohne Durchströmung in der gewünschten Weise eingestellt.

Wesen der Erfindung ist es also, im Läuterteil eine definierte Temperaturschichtung unter Vermeidung jeglicher Verwirbelung einzustellen, wobei dies auch während der Aufheizung bzw. Kühlung und im Bereich der höchsten Temperaturen aufgrund der geringen Badtiefe erreicht wird. Der Verbrennungsstrom verläuft zur Erhöhung des Wirkungsgrades zur Schmelzkammer und dort bis nahe zur Gemengeeingabe.

**Patentansprüche**

1. Glasschmelzofen in dem das Gemenge in einem Schmelzteil (1) aufgeschmolzen, in einem an das Schmelzteil anschließenden Läuterteil (2) geläutert, danach in einem daran anschließeden, dem Schmelzteil gegenüberliegenden Homogenisiereungsteil (2a) mit gegenüber dem Läuterteil erhöhter Badtiefe homogenisiert und daraus abgezogen wird, wobei das Gemenge am Anfang des Schmelzteils aufgegeben wird und unter der Gemengeaufgabe Energie durch Elektroden (6) zugeführt wird, mit im Läuterteil angeordneten Brennern (20) und Elektroden (36) zur Zuführung von Energie, mit Wärmeaustauschern zum Energieaustausch zwischen den Verbrennungsgasen und der den Brennern zugeführten Verbrennungsluft, und wobei zwischen dem Schmelzteil (1) und dem Läuterteil (2) ein Bodendurchlaß (37) angeordnet ist.

2. Glasschmelzofen nach Anspruch 1, dadurch gekennzeichnet, daß zwischem dem Läuter- und dem Homogenisierungteil (2, 2a) ein weiterer Bodendurchlaß (30) angeordnet ist.

3. Glasschmelzofen nach Anspruch 1 oder 2, dadurch gekennzeichnet, daß in dem Feuerfestmaterial des Bogens (38) des Durchlasses (37) Rohre (39) zur Durchleitung von kühlender Verbrennungsluft angeordnet sind.

4. Glasschmelzofen nach Anspruch 1 oder 2, dadurch gekennzeichnet, daß die Rohre (39) auch im Bogen des Durchlasses (30) zwischen dem Läuter- und Homogenisierungteil (2, 2a) vorhanden sind.

5. Glasschmelzofen nach einem der Ansprüche 1 bis 4, dadurch gekennzeichnet, daß der Homogenisierungteil (2a) als Arbeitswanne ausgebildet ist.

6. Glasschmelzofen nach einem der Ansprüche 1 bis 5, dadurch gekennzeichnet, daß der Läuterteil (2) im flachen Bereich (34) einen Stromverengungseinsatz (41) aufweist.

7. Glasschmelzofen nach einem der Ansprüche 1 bis 6, dadurch gekennzeichnet, daß im strömungsmäßig hinteren Ende des Schmelzteils (1) Deckenbrenner und jeweils unter jedem Brenner ein Bubbler angeordnet ist.

**Claims**

1. Glass-melting furnace, in which the raw glass mixture in melted in a melting unit 1, is refined in a refining unit (2) adjacent to the said melting unit (1), after which it is homogenized in an homogenizing unit (2a) adjacent to the said refining unit (2) which is furnished, in comparison with the refining unit, with an increased melt depth. Glass is withdrawn from the furnace at this point, whereby the raw glass mixture is fed into the front end of the melting unit and energy from electrodes (6) is introduced to the raw glass mixture unter the input feeder, in the refining unit burners (20) and electordes (36) provide the energy with heat exchangers for exchange of energy between the combustion gases and the combustion air fed to the burners, and whereby a bottom outlet (37) is mounted between the melting unit (1) and the refining unit (2).

2. Glass-melting furnace according to patent claim 1, characterized in that a further bottom outlet (30) is mounted between the refining and the homogenizing unit (2, 2a).

3. Glass-melting furnace according to claim 1 or 2, characterized in that tubes (39) for the conducting of initially cool combustion air is mounted in the heat-resistant material of the arch (38), and in the outlet (37).

4. Glass-melting furnace according to claims 1 or 2, characterized in that the tubes (39) are also mounted in the arch of the outlet (30) between the refining and the homogenizing unit (2, 2a).

5. Glass-melting furnace according to one of the claims 1 to 4, characterized in that the homogenizing unit (2a) is so constructed that it serves as the work vat.

6. Glass-melting fuurnace according to one of the claims 1 to 5, characterized in that the refining unit (2) features in its shallow area (34) a flow constricting insert.

7. Glass-melting furnace according to one of the claims 1 to 6, characterized in that the farther end (viewed from the perspective of the glass flow) of the melting unit (1) features roof burners and, below each burner, a bubbler.

**Revendications**

1. Four de fusion de verre, dans lequel la fritte est fondue dans une section de fusion (1), est affinée dans une section d'affinage (2) communiquant avec la section de fusion, est ensuite homogénéisée dans une section d'homogénéisation (2a) se raccordant à l'opposé de la section de fusion et ayant une profondeur de bain supérieure à celle de la section d'affinage et en est soutirée, cette fritte étant chargée à l'entrée de la section de fusion avec apport d'énergie en fonction des besoins de la fritte, par des électrodes (6), des brûleurs (20) et des électrodes (36) étant disposés dans la section d'affinage pour réaliser cet apport, tandis que des échangeurs thermiques pour l'échange d'énergie entre les gaz de combustion et l'air de combustion envoyé aux brûleurs, sont présents avec un siphon (37) disposé entre la section de fusion (1) et la section d'affinage (2).

2. Four de fusion de verre selon la revendication 1, caractérisé en ce qu'un autre siphon (30) est disposé entre la section d'affinage et la section d'homogénéisation (2, 2a).

3. Four de fusion de verre selon la revendication 1 ou 2, caractérisé en ce que, dans le matériau réfractaire de la voûte (38) du siphon (37), des tubes (39) sont agencés pour le passage de l'air de combustion refroidissant.

4. Four de fusion de verre selon la revendication 1 ou 2, caractérisé en ce que les tubes (39) sont également prévus dans la voûte du siphon (30) entre les sections d'affinage et d'homogénéisation (2, 2a).

5. Four de fusion selon l'une des revendications 1 à 4, caractérisé en ce que la section d'homogénéisation (2a) est conçue comme une cuve de travail.

6. Four de fusion de verre selon l'une des revendications 1 à 5, caractérisé en ce que la section d'affinage (2) présente dans une région plane (34) un dispositif de réduction d'écoulement (41).

7. Four de fusion de verre selon l'une des revendications 1 à 6, caractérisé en ce qu'à l'extrémité aval de la partie de fusion (1) dans le sens de l'écoulement, sont disposés des brûleurs de voûte et, sous chacun de ces brûleurs, un "barboteur".

Fig.1

Fig. 2

EP 0 317 551 B1

Fig.3

Fig. 4

Fig.5